# EUROPEAN PATENT APPLICATION

(11) **EP 4 651 296 A1**
(43) Date of publication of application: **19.11.2025**
(21) Application number: 24904200.3
(22) Date of filing: 09.12.2024
(51) Int. Cl.: H01M 50/533, G01B 11/14, H01M 10/04, H01M 10/0587

(54) **CBI IN-TAB BENDING DEVICE TO WHICH POSITION MEASURING UNIT IS ADDED**

(30) Priority: 12.12.2023 KR 20230180034
(71) Applicant: LG Energy Solution, Ltd., Seoul 07335 (KR)
(72) Inventor: KIM, Seong Kyu, Daejeon 34122 (KR)
(74) Representative: Goddar, Heinz J.
(86) International application number: PCT/KR2024/020022
(87) International publication number: WO 2025/127635

(57) **Abstract**

Disclosed is an apparatus for bending a negative electrode tab of a jelly-roll electrode assembly having a positive electrode tab and the negative electrode tab, the apparatus including a jig configured to hold the jelly-roll electrode assembly such that the negative electrode tab is located above, a pressing mechanism configured to downwardly press the negative electrode tab from above, a spindle device configured to move the pressing mechanism upward and downward, and a position measurement unit configured to measure the vertical position of the pressing mechanism.

## Description

### [Technical Field]

The present invention relates to a CBI In-Tab bending apparatus with a position measurement unit. More particularly, the present invention relates to a CBI In-Tab bending apparatus with a position measurement unit configured to measure the position of a pressing mechanism used to bend a negative electrode tab of a lower part of a jelly-roll electrode assembly by 90 degrees.

### [Background Art]

A lithium secondary battery includes an electrode assembly in which a positive electrode coated with a positive electrode active material, a negative electrode coated with a negative electrode active material, and a separator located between the positive electrode and the negative electrode are stacked, the separator being configured to prevent short circuit and to allow migration of lithium ions (Li-ions), a battery case configured to receive the electrode assembly, and an electrolyte solution injected into the battery case to allow migration of lithium ions therethrough.

Depending on the shape of the battery case, the lithium secondary battery is classified as a cylindrical battery having an electrode assembly mounted in a cylindrical metal can, a prismatic battery having an electrode assembly mounted in a prismatic metal can, or a pouch-shaped battery having an electrode assembly mounted in a pouch-shaped case made of an aluminum laminate sheet. The cylindrical battery has the advantage of relatively high capacity and structural safety.

The cylindrical battery is manufactured by receiving a jelly-roll electrode assembly, which is configured such that a positive electrode sheet and a negative electrode sheet are wound in the state in which a separator sheet is interposed therebetween, in a cylindrical battery case and sealing the cylindrical battery case. The jelly-roll electrode assembly is received in the cylindrical can, and a negative electrode tab located at a lower part of the jelly-roll electrode assembly is welded to an inner bottom of the cylindrical can.

Before the jelly-roll electrode assembly is received in the cylindrical can, a cylindrical bottom insulator (hereinafter referred to as "CBI") is added to a lower part of the jelly-roll electrode assembly in order to insulate the jelly-roll electrode assembly from the cylindrical can. The jelly-roll electrode assembly is inverted such that the negative electrode tab is located above, and the negative electrode tab is bent 90 degrees using a pressing mechanism. Before bending, the negative electrode tab (In-Tab) is aligned so as to correspond in position to the pressing mechanism.

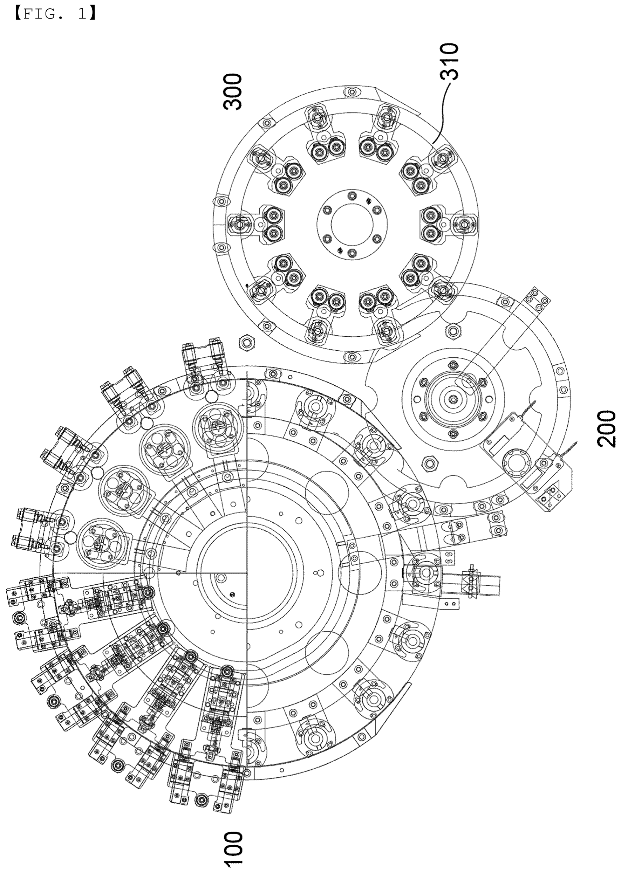

FIG. 1 is a top view of a conventional CBI In-Tab bending apparatus.

Referring to FIG. 1, it is necessary to align a negative electrode tab (In-Tab) before insertion of the negative electrode tab into the CBI In-Tab bending apparatus. Before bending a negative electrode tab (In-Tab) of a jelly-roll electrode assembly received from the preceding process, the negative electrode tab is aligned so as to correspond in position to a pressing mechanism. Three rotary apparatuses are shown in FIG. 1. The first rotary apparatus 100 is a rotary apparatus capable of receiving 16 jelly-roll electrode assemblies and proceeding with work. The first rotary apparatus 100 and the second rotary apparatus 200 are apparatuses for aligning the negative electrode tab (In-Tab) so as to correspond in position to the pressing mechanism. The apparatus for aligning the electrode tab is known from Patent Documents 4 and 5, and the present invention uses a jelly-roll electrode assembly in which an electrode tab, specifically a negative electrode tab, has been aligned, and therefore a description thereof will be omitted.

When a jelly-roll electrode assembly is wound, a negative electrode tab and a positive electrode tab protrude from a circular upper surface or a circular lower surface of the wound electrode assembly. However, the position from which the electrode tabs protrude may be the outermost side, the middle, or the innermost side of the jelly-roll electrode assembly. This position depends on the notching position of the tabs when the electrode assembly is manufactured. Meanwhile, each of the negative electrode tab and the positive electrode tab may be provided in plural. When the electrode tab protrudes from the middle, the electrode tab is referred to as an In-Tab. In the present invention, only one negative electrode tab is provided, and the negative electrode tab is an In-Tab.

The jelly-roll electrode assembly having been aligned is transferred to the third and final rotary apparatus 300, and the negative electrode tab is bent 90 degrees by a CBI In-Tab bending apparatus. This is shown as a spindle tool 310 in FIG. 1. As previously described, the positive electrode tab and negative electrode tab of the jelly-roll electrode assembly protrude from the circular upper surface or the circular lower surface of the wound electrode assembly circle. In the last rotary apparatus 300, the negative electrode tab of the jelly-roll electrode assembly erected vertically such that the negative electrode tab is located above is bent by a pressing mechanism.

If the negative electrode tab is erected vertically, the negative electrode tab may not be bent by the pressing mechanism that bends the negative electrode tab while downwardly moving from above but may be deformed in a zigzag shape or may be partially folded.

In order to solve the above problem, the end of the negative electrode tab is deformed so as to be slightly inclined as a preliminary operation before the pressing mechanism presses the negative electrode tab, i.e., the In-Tab. The pressing mechanism may naturally bend the entirety of the negative electrode tab 90 degrees by pressing a middle part of the inclined negative electrode tab.

The apparatus according to FIG. 1 is an apparatus capable of continuously working on a plurality of jelly-roll electrode assemblies without stopping. Consequently, a very large number of defective products may be produced if the working conditions are not upgraded.

The bending angle depends on the pressing depth of the pressing mechanism. If the pressing depth is too small, bending is not completely performed and the negative electrode tab is not bent 90 degrees. When such a jelly-roll electrode assembly is inserted into a cylindrical can, defects occur during welding of the negative electrode tab.

If the pressing depth of the pressing mechanism is too large, the negative electrode tab, which is supposed to be bent, may be crushed. Many defects occur if the electrode tab is not properly aligned in a preliminary step, and many defects also occur depending on the pressing depth of the pressing mechanism.

In the conventional CBI In-Tab bending apparatus, the pressing depth of the pressing mechanism is not measured despite the above problem. It is possible to improve product quality and to reduce the defect rate by measuring the pressing depths of the pressing mechanism and comparing and changing the same. Conventionally, however, the above problem does not seem to be recognized. That is, the pressing mechanism is moved upward and downward by a spindle device, but the position according to such movement is not measured.

Patent Document 1 discloses an apparatus for aligning a tab of a jelly roll 10 in the state in which a can 20 having the jelly roll received therein is placed in a transfer carrier 30 having open upper and lower parts, but does not provide a spindle configured to align the tab of the jelly roll, and does not provide a height sensor configured to measure the position of the spindle.

Patent Document 2 discloses that a lead 3 configured to connect an electrode group 14 and a sealing plate 2 to each other is included and that, in order to assemble the sealing plate 2 to an opening of a cylindrical battery case 1, an upper spindle 7 is moved downward from above the cylindrical battery case 1 to guide the sealing plate 2 to the opening 1a of the cylindrical battery case 1 for assembly, i.e., technology for downwardly moving the upper spindle 7 to assemble the sealing plate 2 to the case 1, which is different from bending an electrode tab.

Patent Document 3 discloses a press apparatus including a slide position detecting means 8 moved upward and downward by a slide driving means 2 to measure the height of a slide 4 that performs pressing, wherein this technology is used in a hydraulic press apparatus, which is different from bending an electrode tab.

As such, no technology capable of separately measuring the pressing depth of a pressing mechanism has been proposed, and the defects that may be caused thereby do not seem to be recognized.
Korean Registered Patent Publication No. 0486149 ("Patent Document 1")
Japanese Patent Application Publication No. 1997-167602 ("Patent Document 2")
Korean Patent Application Publication No. 2018-0046403 ("Patent Document 3")
Korean Registered Patent Publication No. 0145206 ("Patent Document 4")
Korean Registered Patent Publication No. 0148933 ("Patent Document 5")

### [Disclosure]

### [Technical Problem]

The present invention has been made in view of the above problems, and it is an object of the present invention to provide a CBI In-Tab bending apparatus with a position measurement unit configured to measure the position of a pressing mechanism used to bend a negative electrode tab of a lower part of a jelly-roll electrode assembly by 90 degrees, a jelly-roll electrode assembly bent by the CBI In-Tab bending apparatus, a cylindrical battery including the bent jelly-roll electrode assembly, and a method of bending a negative electrode tab of a lower part of a jelly-roll electrode assembly by 90 degrees using the CBI In-Tab bending apparatus.

### [Technical Solution]

In order to accomplish the above object, the present invention provides an apparatus for bending a negative electrode tab of a jelly-roll electrode assembly having a positive electrode tab and the negative electrode tab, the apparatus including a jig configured to hold the jelly-roll electrode assembly such that the negative electrode tab is located above, a pressing mechanism configured to downwardly press the negative electrode tab from above, a spindle device configured to move the pressing mechanism upward and downward, and a position measurement unit configured to measure the vertical position of the pressing mechanism.

In the present invention, the spindle refers to a mechanism that performs up and down movement while moving along a cam, and the negative electrode tab according to the present invention is typically located at a lower part of a cylindrical can.

The position measurement unit may include a measurement dog attached to an upper surface of the pressing mechanism and a displacement sensor configured to measure the height of the measurement dog, and the displacement sensor may be fixed to a separate bracket.

The displacement sensor may be a laser displacement sensor. The laser displacement sensor is a sensor configured to emit a laser through a light emitting portion of the sensor and to read the displacement from the reflected laser. However, the displacement sensor may be any sensor capable of measuring displacement and is not necessarily limited to the laser displacement sensor. The negative electrode tab is an In-Tab.

The pressing mechanism may be configured to press a side surface of a middle part of the negative electrode tab upon pressing the negative electrode tab. Before the pressurizing mechanism presses the negative electrode tab, at least a part of the negative electrode is obliquely deformed. This may be achieved by an apparatus provided in the preceding step.

The jelly-roll electrode assembly may be configured to be held by the jig in a state in which the orientation of the negative electrode tab is aligned to coincide with a pressing surface of the pressing mechanism when the jelly-roll electrode assembly is held by the jig. The alignment may be performed by an In-Tab alignment apparatus provided in the preceding step.

In addition, the present invention provides a method of bending a negative electrode tab of a jelly-roll electrode assembly using the apparatus for bending the electrode tab according to the present invention, the method including a first step of positioning the jelly-roll electrode assembly using the jig such that the negative electrode tab is located above and a second step of downwardly pressing the negative electrode tab from above using the pressing mechanism, wherein the second step is performed simultaneously with measuring the vertical position of the pressing mechanism using the position measurement unit.

In addition, the present invention provides a jelly-roll electrode assembly having a negative electrode tab bent by the apparatus for bending the electrode tab.

In addition, the present invention provides a cylindrical battery including the jelly-roll electrode assembly according to the present invention.

In addition, the present invention may provide arbitrary combinations of the above solving means.

### [Advantageous Effects]

The present invention is capable of providing an apparatus for bending a negative electrode tab of a jelly-roll electrode assembly having a positive electrode tab and the negative electrode tab, the apparatus including a jig configured to hold the jelly-roll electrode assembly such that the negative electrode tab is located above, a pressing mechanism configured to downwardly press the negative electrode tab from above, a spindle device configured to move the pressing mechanism upward and downward, and a position measurement unit configured to measure the vertical position of the pressing mechanism.

The present invention has the effect of reducing a defect rate in CBI In-Tab bending by measuring the position of the pressing mechanism of the negative electrode tab bending apparatus.

### [Description of Drawings]

FIG. 1 is a top view of a conventional CBI In-Tab bending apparatus.
FIG. 2 is a top view of a CBI In-Tab bending apparatus according to the present invention.
FIG. 3 is a schematic view showing the measurement of the displacement of a pressing mechanism of the CBI In-Tab bending apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Embodiments of the present invention will be described in detail with reference to the drawings.

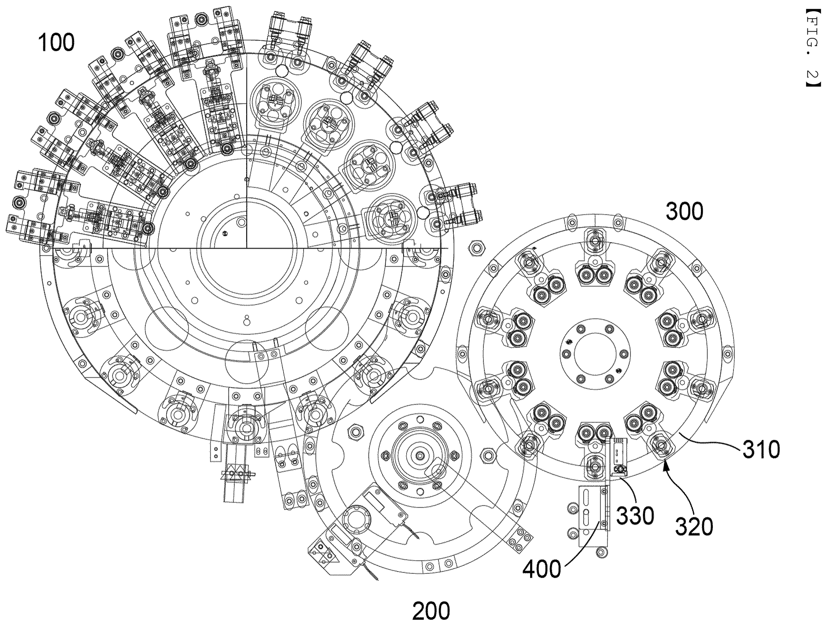

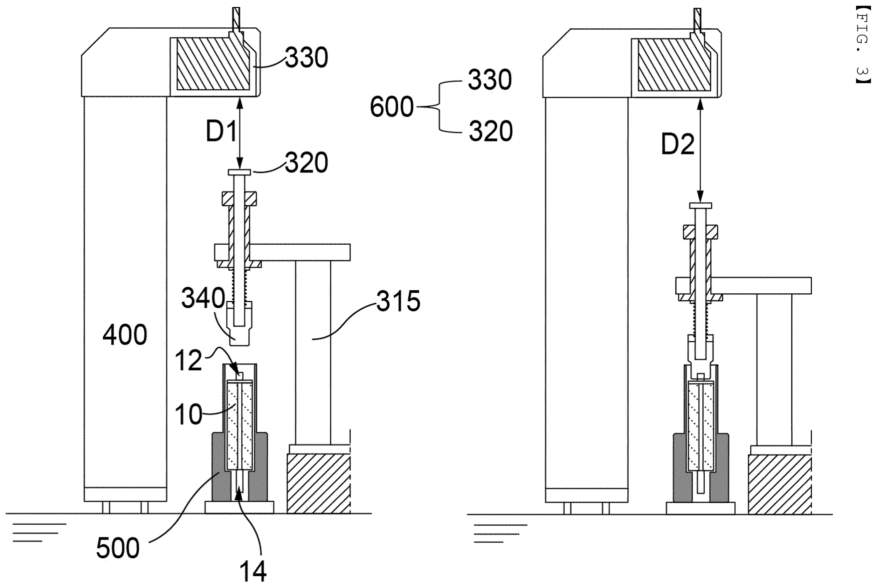

FIG. 2 is a top view of a CBI In-Tab bending apparatus according to the present invention, and FIG. 3 is a schematic view showing the measurement of the displacement of a pressing mechanism of the CBI In-Tab bending apparatus according to the present invention.

FIG. 1 is a top view of a conventional CBI In-Tab bending apparatus, and FIG. 2 further shows a measurement dog 320, a displacement sensor 330, and a bracket 400, which are not shown in FIG. 1.

A spindle tool 310 shown in FIGs. 1 and 3 includes a spindle 315 and a pressing mechanism 340. Referring to FIG. 3, the present invention relates to an apparatus for bending an negative electrode tab 12 of a jelly-roll electrode assembly 10 having a positive electrode tab 14 and the negative electrode tab 12, the apparatus including a jig 500 configured to hold the jelly-roll electrode assembly 10 such that the negative electrode tab 12 is located above, a pressing mechanism 340 configured to downwardly press the negative electrode tab 12 from above, a spindle 315 configured to move the pressing mechanism 340 upward and downward, and a position measurement unit 600 configured to measure the vertical position of the pressing mechanism 340. The position measurement unit 600 includes a measurement dog 320 and a displacement sensor 330. In the present invention, the spindle 315 refers to a mechanism that performs up and down movement while moving along a cam, and the negative electrode tab 12 according to the present invention is typically located at a lower part of a cylindrical can.

The position measurement unit 600 includes a measurement dog 320 attached to an upper surface of the pressing mechanism 340 and a displacement sensor 330 configured to measure the height of the measurement dog 320. The displacement sensor 330 is fixed to a separate bracket 400. The displacement sensor 330 is a laser displacement sensor. The laser displacement sensor is a sensor configured to emit a laser through a light emitting portion of the sensor and to read the displacement from the reflected laser. Meanwhile, the negative electrode tab 12 is an In-Tab.

The left side (lower side) of FIG. 3 is a schematic view showing the state before the pressing mechanism 340 presses the negative electrode tab 12, and the right side (upper side) of FIG. 3 is a schematic view showing the state after the pressing mechanism 340 presses the negative electrode tab 12. The right side of FIG. 3 shows the pressing mechanism 340 and the negative electrode tab 12 in an overlapping state for ease of understanding. The position measurement values D1 and D2 are the positions of the pressing mechanism 340 and are quantitative data indicating the degree of pressing actually performed by the pressing mechanism. Based only on the difference in the position measurement values, it is possible to easily determine whether the negative electrode tab has been properly bent to identify only an apparatus that is defective, and to determine the range within which bending is performed normally, which may greatly improve the quality. The CBI In-Tab bending apparatus according to the present invention has already been applied to an actual cylindrical battery manufacturing process and has contributed to improvement of product quality.

Those skilled in the art to which the present invention pertains will appreciate that various applications and modifications are possible within the category of the present invention based on the above description.

### (Description of Reference Symbols)

10: Jelly-roll electrode assembly
12: Negative electrode tab
14: Positive electrode tab
100: First rotary apparatus
200: Second rotary apparatus
300: Third rotary apparatus
310: Spindle tool
315: Spindle
320: Measurement dog
330: Displacement sensor
340: Pressing mechanism
400: Bracket
500: Jig
600: Position measurement unit (320, 330)
D1, D2: Position measurement values

## Claims

1. An apparatus for bending a negative electrode tab of a jelly-roll electrode assembly having a positive electrode tab and the negative electrode tab, the apparatus comprising:
a jig configured to hold the jelly-roll electrode assembly such that the negative electrode tab is located above;
a pressing mechanism configured to downwardly press the negative electrode tab from above;
a spindle device configured to move the pressing mechanism upward and downward; and
a position measurement unit configured to measure a vertical position of the pressing mechanism.

2. The apparatus according to claim 1, wherein the position measurement unit comprises:
a measurement dog attached to an upper surface of the pressing mechanism; and
a displacement sensor configured to measure a height of the measurement dog.

3. The apparatus according to claim 2, wherein the displacement sensor is fixed to a separate bracket.

4. The apparatus according to claim 2, wherein the displacement sensor is a laser displacement sensor.

5. The apparatus according to claim 1, wherein the negative electrode tab is an In-Tab.

6. The apparatus according to claim 1, wherein the pressing mechanism is configured to press a side surface of a middle part of the negative electrode tab upon pressing the negative electrode tab.

7. The apparatus according to claim 1, wherein the jelly-roll electrode assembly is configured to be held by the jig in a state in which an orientation of the negative electrode tab is aligned to coincide with a pressing surface of the pressing mechanism when the jelly-roll electrode assembly is held by the jig.

8. A method of bending a negative electrode tab of a jelly-roll electrode assembly using the apparatus according to any one of claims 1 to 7, the method comprising:
a first step of positioning the jelly-roll electrode assembly using the jig such that the negative electrode tab is located above; and
a second step of downwardly pressing the negative electrode tab from above using the pressing mechanism, wherein
the second step is performed simultaneously with measuring a vertical position of the pressing mechanism using the position measurement unit.

9. A jelly-roll electrode assembly having a negative electrode tab bent by the apparatus according to any one of claims 1 to 7.

10. A cylindrical battery comprising the jelly-roll electrode assembly according to claim 9.
